# EUROPÄISCHE PATENTSCHRIFT

(11) **EP 2 756 747 B1**
(45) Veröffentlichungstag und Bekanntmachung des Hinweises auf die Patenterteilung: **25.07.2018**
(21) Anmeldenummer: 13193836.7
(22) Anmeldetag: 21.11.2013
(51) Int. Cl.: A01D 69/08, A01D 45/02

(54) **Vorsatzgerät zum Ernten von Mais**
Attachment device for harvesting maize
Appareil frontal pour la récolte de maïs

(30) Priorität: 18.01.2013 DE 102013100495
(43) Veröffentlichungstag der Anmeldung: 23.07.2014
(73) Patentinhaber: CLAAS Selbstfahrende Erntemaschinen GmbH, 33428 Harsewinkel (DE)
(72) Erfinder: Tilly, Thomas, 48231 Warendorf (DE); Engler, Thomas Dennis, 87656 Germaringen (DE); Albinger, Bernd, 33378 Rheda-Wiedenbrück (DE); Zegota, Thomas, 33428 Harsewinkel (DE)

(56) Entgegenhaltungen:
- DE-A1- 10 329 409
- FR-A1- 2 805 963
- US-A- 3 402 539

## Beschreibung

Die Erfindung betrifft gemäß dem Oberbegriff des Patentanspruchs 1 ein Vorsatzgerät zum Ernten von Mais für eine selbstfahrende Erntemaschine mit einer Pflückeinrichtung zum Trennen der Maiskolben von den übrigen Bestandteilen der Maispflanze, die gegenläufig rotierende Pflückwalzen aufweist, wobei innerhalb eines Antriebsstrangs der Pflückeinrichtung eine Überlastkupplung angeordnet ist.

Die Hackfrucht Mais wird im Allgemeinen als Reihenkultur angebaut, wobei die Aussaat mittels Einzelkornsaat erfolgt und die ausgewachsenen Maispflanzen eine Wuchshöhe von bis zu drei Metern erreichen können. Dabei besteht die Maispflanze im Wesentlichen aus einem Maisstängel, bis zu einem Meter langen Maisblättern sowie Fruchtständen, die als von Hüllblättern umschlossene Maiskolben ausgebildet sind. Es gibt zwei wesentliche Arten der Maisernte, nämlich zum einen die Ernte als Futtermais oder Biomasse mittels eines Feldhäckslers und zum anderen die Ernte von Körnermais mittels eines mit einem entsprechenden Vorsatzgerät versehenen Mähdreschers. Mit dem Feldhäcksler wird die gesamte Maispflanze einschließlich der Maiskörner zerkleinert, um diese anschließend in Form von Silomais als Futtermittel zu verwenden. In dieser zerkleinerten Form kann die Maispflanze auch als Biomasse Biogasanlagen zugeführt werden. Die für die Ernte der Maispflanzen verwendeten Feldhäcksler verarbeiten, wie bereits dargelegt, die gesamte Maispflanze, so dass der Fruchtstand, also der die Maiskörner aufnehmende Maiskolben nicht von den übrigen Pflanzenbestandteilen getrennt werden muss.

Demgegenüber wird bei der Ernte von Körnermais mit einem Mähdrescher dessen zur Getreideernte dienendes Schneidwerk gegen ein Vorsatzgerät für die Maisernte ausgetauscht. Dieses Vorsatzgerät verfügt über mehrere Ernteeinrichtungen, nämlich über Einzugseinrichtungen, die den jeweiligen Maisstängel erfassen und innerhalb einer Führungsbahn führen, über eine Pflückeinrichtung, die für einen kontrollierten Einzug der gesamten Maispflanze und ein Entfernen des Maiskolbens von dem Maisstängel sorgt, und einen Querförderer, der die von den einzelnen Maisstängeln getrennten Maiskolben mittig des Vorsatzgerätes in dessen Mulde zusammenzieht und an einen Schrägförderer übergibt. Dieser Schrägförderer ist allerdings Bestandteil des Mähdreschers, das heißt, beim Ankuppeln des Erntevorsatzes an den Mähdrescher wird dieser mit dem Schrägförderer verbunden, der die Maiskolben während des Erntevorganges einem Dreschwerk des Mähdreschers zuführt. Ein entsprechendes Vorsatzgerät, in welchem die vorgenannten Pflückeinrichtungen vorgesehen sind, ist Gegenstand der vorliegenden Erfindung.

Das Vorsatzgerät weist je nach Arbeitsbreite mehrere Pflückeinrichtungen auf, die aus paarweise zusammenwirkenden Pflückwalzen bestehen, wobei in der Regel jeder der vorgenannten Einzugseinrichtungen eine entsprechende Pflückeinrichtung zugeordnet ist. Die Pflückwalzen, die an ihrer Außenmantelfläche profiliert sind, können entweder in Ernterichtung oder quer zu dieser ausgerichtet sein. Zumindest eine der Pflückwalzen des jeweiligen Pflückwalzenpaares nimmt stirnseitig eine Einzugsschnecke auf, über die die Maisstängel in den Bereich der profilierten Pflückwalzen gefördert werden. Jedem der Pflückwalzenpaare ist ein durch Pflückplatten gebildeter Pflückspalt zugeordnet, der in einer zwischen den beiden Pflückwalzen verlaufenden vertikalen Ebene angeordnet ist. Während des Pflückvorgangs wird der jeweilige Maisstängel über die rotierenden Pflückwalzen, durch den Pflückspalt hindurch, in Richtung des Bodens gezogen, so dass der Maiskolben an den Pflückplatten vom Maisstängel abgestreift wird, also eine Trennung der Maiskolben von dem Maisstängel erfolgt.

Dabei kann der Maisstängel während dieser Bewegung über gegebenenfalls vorhandene Häckselmesser einer Häckselvorrichtung, die auf einer vertikal verlaufenden Messerwelle angeordnet sind, bodennah abgeschnitten, zerkleinert und auf dem Feld abgelegt werden. Darüber hinaus besteht aber auch die Möglichkeit, eine als Mulchgerät oder Schlegelmäher ausgebildete Häckseleinrichtung unterhalb des Schrägförderers des Mähdreschers oder an der Rückwand des Vorsatzgerätes vorzusehen. Die Häckseleinrichtung soll für eine vollständige Zerkleinerung des aus Blattanteilen der Maispflanzen und der Maisstängel bestehenden Maisstrohs sorgen, damit dieses gleichmäßiger über den Boden verteilt ist und bei einer anschließenden Bodenbearbeitung vollständig in diesen eingearbeitet werden kann. Das vollständige Einarbeiten des Maisstrohs in den Boden und die gleichmäßig Vermischung mit diesem zur Förderung von dessen Verrottung ist zur Vermeidung von Schädlingsbefall, wie zum Beispiel dem Befall mit Fusariosen oder Maiszünslern, von erheblicher Bedeutung.

An der Pflückeinrichtung können während der Maisernte Überlastzustände auftreten, wobei diese primär durch eine zu große vom Erntevorsatz aufgenommene Erntegutmenge oder durch auf den Erntevorsatz gelangte Fremdkörper verursacht werden können, die jeweils zwischen die Pflückwalzen gelangt sind und an diesen einen Drehmomentanstieg bewirken. Daher wird im Antriebsstrang des Vorsatzgerätes eine Überlastsicherung in Form eines abscherenden Bauelements oder eine Überlastkupplung angeordnet, die bei Überschreitung eines maximalen Drehmoments den Antrieb der Pflückeinrichtung oder des gesamten Vorsatzgerätes unterbricht.

Ein Vorsatzgerät zum Ernten von Mais der im Oberbegriff des Patentanspruches 1 angegebenen Gattung ist aus der DE 103 29 409 A1 bekannt. Dieses Vorsatzgerät, das in dem Dokument als Einzugs- und Pflückeinrichtung bezeichnet wird, ist mit Pflückwalzen versehen, die mit ihrer axialen Erstreckung in Richtung des Erntegutflusses weisen. Ein Einzugselement, das über seinen Umfang verteilte, sich radial erstreckende Finger aufweist, ist neben dem Pflückwalzenpaar angeordnet. Außerdem soll unterhalb des Pflückwalzenpaares ein mit radial verlaufenden Messern versehener Stängelhäcksler angeordnet sein, der den abgeernteten Maisstängel zerkleinert. Ein Antriebsstrang des Vorsatzgerätes weist eine vom Antriebssystem der Erntemaschine angetriebene quer zum Erntevorsatz verlaufende Hauptantriebswelle auf, die über ein Winkelgetriebe die beiden Pflückwalzen und den Stängelhäcksler antreibt. Innerhalb eines das Winkelgetriebe aufnehmenden Getriebegehäuses sind auf einer vom Winkelgetriebe ausgehenden Antriebswelle nacheinander eine Überlastkupplung für den Antriebsstrang der beiden Pflückwalzen und eine Überlastkupplung für den Antriebsstrang des Stängelhäckslers angeordnet. Dadurch soll erreicht werden, dass die Überlastkupplungen platzsparend innerhalb des Getriebegehäuses angeordnet sind und in einem gemeinsam genutzten Ölbad desselben laufen.

Weiterhin ist aus der FR 2 805 963 A1 ein Vorsatzgerät zum Ernten von Mais bekannt, bei welchem sich in Ernterichtung längs erstreckende Pflückwalzen ebenfalls über ein in einem Getriebegehäuse angeordneten Winkeltrieb angetrieben werden. Das Winkelgetriebe weist dabei ein auf einer Hauptantriebswelle angeordnetes Doppelkegelrad auf, in das eine Überlastkupplung integriert ist. Mit den Kegelradverzahnungen des Doppelkegelrades stehen jeweils Kegelräder der beiden Pflückwalzen im Eingriff.

Es ist Aufgabe der vorliegenden Erfindung, ein Antriebssystem für ein zum Ernten von Mais vorgesehenes Vorsatzgerät einer selbstfahrenden Erntemaschine zu schaffen, bei welchem eine Überlastkupplung für die Pflückeinrichtung sowohl hinsichtlich ihrer Funktion als auch des Bauraumbedarfs optimal angeordnet ist.

Diese Aufgabe wird ausgehend vom Oberbegriff des Patentanspruches 1 in Verbindung mit dessen kennzeichnenden Merkmalen gelöst. Die von diesem abhängigen weiteren Patentansprüche geben jeweils vorteilhafte Weiterbildungen der Erfindung wieder.

Gemäß dem kennzeichnenden Teil des Patentanspruches 1 soll jeder Pflückwalze unmittelbar eine Überlastkupplung zugeordnet sein. Die Zuordnung einzelner Überlastkupplungen zu den Pflückwalzen und somit die getrennte Überwachung des an den einzelnen Pflückwalzen auftretenden Drehmoments führt dazu, dass das an der Überlastkupplung überwachte Überlastmoment für den Antriebsstrang verringert werden kann. Somit können die an den Bauteilen der Pflückwalzen auftretenden Drehmomente und die daraus resultierenden Kräfte deutlich reduziert werden. Daher kann die Dimensionierung der Bauteile der Pflückeinrichtung und deren Antriebselemente derart optimiert werden, dass Zahnräder, Wellen, Gehäuse und Verbindungselemente kleiner ausgeführt werden können, woraus eine signifikante Reduzierung des Gewichts, der Kosten und des Bauraumbedarfs resultiert. Außerdem lassen sich die Überlastelemente der Überlastkupplung mit kleinerem Durchmesser ausbilden, so dass die verschleißrelevanten Gleitgeschwindigkeiten reduziert werden.

Demgegenüber ist sowohl nach der DE 103 29 409 A1 als auch nach der FR 2 805 963 A1 die jeweilige Überlastkupplungen derart angeordnet, dass über diese beide Pflückwalzen gemeinsam gegen Überschreitungen eines maximalen Drehmoments abgesichert sind. Daher kann aber nur die Summe der an beiden Pflückwalzen auftretenden Drehmomente überwacht werden. Eine aus diesen Druckschriften vorbekannte paarweise Absicherung der Pflückwalzen hat zur Folge, dass das Absicherungsmoment entsprechend der Gesamtleistungsaufnahme relativ hoch sein muss. Folglich müssen die Einzelkomponenten immer auf ein relativ hohes Gesamtdrehmoment ausgelegt sein.

In weiterer Ausgestaltung der Erfindung soll die Überlastkupplung innerhalb der die jeweilige Pflückwalze aufnehmenden Antriebswelle angeordnet sein. Dabei kann die jeweilige Überlastkupplung in vorteilhafter Weise außerhalb des Getriebegehäuses angeordnet sein, so dass sich zum einen die baulichen Abmessungen des Getriebegehäuses verringern lassen und dass zum anderen der Abrieb aus der Überlastkupplung nicht das im Getriebegehäuse vorhandene Getriebeöl verunreinigt. Stattdessen können die einzelnen Überlastkupplungen als separat fettgeschmierte Anordnungen ausgebildet sein. Wartungs- und Instandsetzungsarbeiten lassen sich mit deutlich geringerem Aufwand durchführen, als wenn die Überlastkupplungen gemeinsam mit den übrigen Bauteilen innerhalb des Getriebegehäuses angeordnet wären.

Alternativ dazu kann die jeweilige Überlastkupplung innerhalb der axialen Erstreckung der Pflückwalze angeordnet sein. Dadurch kann die entsprechende Überlastkupplung Bauraum sparend in das Innere der Pflückwalze integriert werden. Die entsprechende Überlastkupplung wird dabei zwischen der entsprechenden in das Innere der Pflückwalze geführten Welle und der Pflückwalze angeordnet sein.

Weiterhin kann in weiterer Ausgestaltung dieser Anordnung die Pflückwalze einen hohlzylindrischen Walzenkörper aufweisen. An einer Innenmantelfläche des Walzenkörpers ist dabei eine erste Kuppelfläche der Überlastkupplung gebildet. Als zweite Kuppelfläche dient eine Außenmantelfläche der Antriebswelle, die konzentrisch durch den Walzenkörper über dessen gesamte axiale Länge verläuft. Zwischen diesen beiden Kuppelflächen sind elastische oder durch Federn vorgespannte Kuppelelemente angeordnet. Somit steht im Inneren der jeweiligen Pflückwalze ein vergleichsweise großer Bauraum für die Integration der Überlastkupplung zur Verfügung, so dass sich die Zahl der Kuppelelemente derart wählen lässt, dass an diesen während des Betriebs des Vorsatzgerätes nur ein geringer Verschleiß auftritt.

Weiterhin soll gemäß einer ersten Ausgestaltung der Erfindung die Innenmantelfläche reibschlüssig gegenüber der Außenmantelfläche geführt sein, wobei zwischen diesen Flächen vorgespannte Kuppelelemente angeordnet sind. In diesem Fall ist die Überlastkupplung als Rutschkupplung ausgebildet, wobei an einem der beiden Bauteile Mitnehmer ausgebildet sind, die als Reibelemente ausgebildete Kuppelelemente aufnehmen. Diese Reibelemente sind unter einer Vorspannung an der gegenüberliegenden Fläche, also der Innenmantelfläche oder der Außenmantelfläche geführt.

Alternativ zu dieser Lösung sollen die Innenmantelfläche und/oder die Außenmantelfläche gemeinsam mit den Kuppelelementen ein kraftschlüssiges Kuppelsystem bilden. Dabei kann es sich beispielsweise um die Funktion einer Sternratsche handeln, bei der die Kuppelelemente an einem der Bauteile formschlüssig geführt und durch Druckfedern abgestützt sind, wobei sie mit ihren Enden in Rastausnehmungen liegen und bei Überschreiten eines maximalen Drehmoments aus der Rastausnehmung heraus über eine Rampe bewegt werden.

Die Erfindung ist nicht auf die angegebene Kombination der Merkmale des Patentanspruchs 1 und der abhängigen Patentansprüche beschränkt. Es ergeben sich darüber hinaus Möglichkeiten, einzelne Merkmale auch, soweit sie aus den Patentansprüchen, den Vorteilsangaben zu den Patentansprüchen, der nachfolgenden Beschreibung der Ausführungsbeispiele oder zumindest aus der Zeichnung hervorgehen, miteinander zu kombinieren. Die Bezugnahme der Patentansprüche auf die Zeichnung durch die Verwendung von Bezugszeichen soll den Schutzumfang der Patentansprüche nicht beschränken.

Nachfolgend wird die Erfindung anhand von Zeichnungen erläutert, in denen ein Ausführungsbeispiel der Erfindung vereinfacht dargestellt ist.

Es zeigen:
- Figur 1: als Teilansicht eine Draufsicht auf eine Einheit eines Vorsatzgerätes, in der Einzugselemente, Pflückwalzen sowie ein Querfördere angeordnet sind,
- Figur 2: eine Seitenansicht eines entsprechenden Systems, aus der die Anordnung der Pflückwalzen gegenüber einem Pflückspalt hervorgeht, und
- Figur 3: einen Längsschnitt durch Pflückwalzen, in deren Innerem jeweils Überlastkupplungen angeordnet sind.

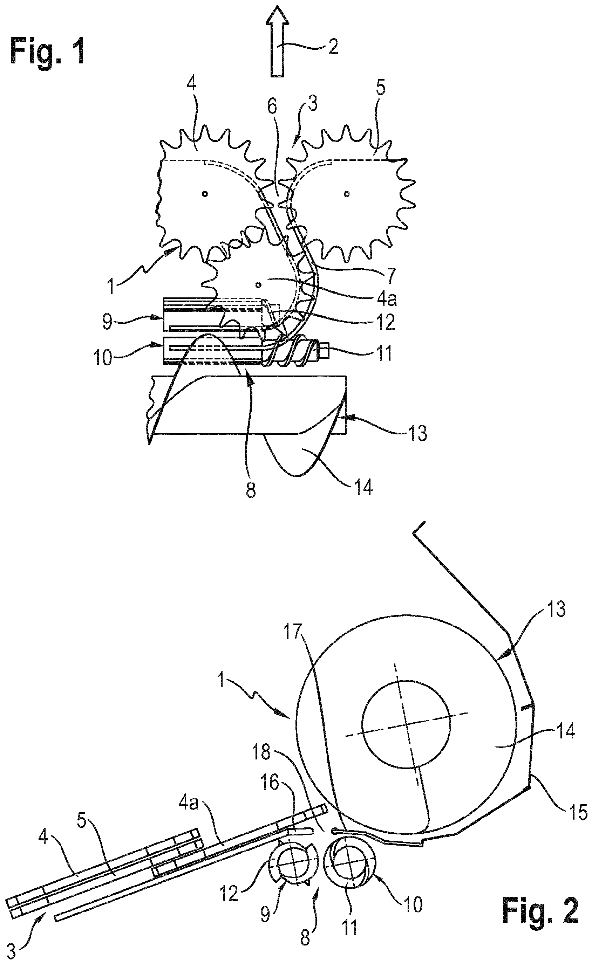

In Figur 1 ist mit 1 Vorsatzgerät zum Ernten von Körnermais bezeichnet, von dem nur ein Teilabschnitt dargestellt ist und das an einen nicht dargestellten Schrägförderer eines ebenfalls nicht dargestellten selbstfahrenden Mähdreschers gekuppelt ist. Dieser Schrägförderer dient dazu, das Erntegut, in diesem Fall die Maiskolben, einem ebenfalls nicht dargestellten Dreschwerk des Mähdreschers, in welchem die Maiskörner während des Dreschvorgangs aus den Kolben gelöst werden, zuzuführen. Während des Erntevorgangs wird dabei das Vorsatzgerät 1 in einer durch einen Pfeil 2 verdeutlichten Fahrtrichtung betrieben.

Bestandteil des Vorsatzgerätes 1 ist eine Einzugseinrichtung 3, die in ihrem vorderen Bereich Fördersterne 4, 4a und 5 aufweist, von welchen Fördersterne 4 und 4a jeweils im Uhrzeigersinn rotieren und ein weiterer Förderstern 5 im Gegenuhrzeigersinn rotiert. Zwischen den Fördersternen 4 und 5 und entlang des Umfangs des Fördersternes 4a ist ein Führungskanal 6 gebildet, der im Bereich des Fördersterns 4a durch eine Abdeckung 7 begrenzt ist. Dabei mündet ein Endabschnitt des Führungskanals 6 in eine erste Pflückeinrichtung 8 ein. Das Vorsatzgerät 1 kann die Maispflanzen sowohl reihenabhängig als auch reihenunabhängig ernten, und daher tritt in letzterem Fall unter Umständen keine geordnete Zuführung der Maispflanzen auf. Außerdem ist davon auszugehen, dass bei einem reihenunabhängig arbeitenden Vorsatzgerät 1, wie es gemäß dieser Figur 1 zum Einsatz kommen kann, über die jeweiligen Einzugsbereiche mehr als eine Reihe von Maispflanzen geerntet wird.

Die in den Figuren 1 und 2 dargestellte Pflückeinrichtungen 8 verfügt über paarweise angetriebene Pflückwalzen 9 und 10. Jedes dieser Pflückwalzenpaare setzt sich dabei aus einer vorderen Pflückwalze 9 und einer hinteren Pflückwalze 10 zusammen, wobei die jeweils hintere Pflückwalze 10 axial verlängert ausgebildet ist und dabei mit einer Einzugsschnecke 11 versehen ist. Im Vergleich dazu sind die jeweiligen vorderen Pflückwalzen 9 kürzer ausgebildet und folglich nur mit einer relativ kurzen Einzugsschnecke 12 versehen. Außerdem sind die Pflückwalzen 9 und 10 an ihrem äußeren Umfang profiliert, um während des Pflückvorgangs den entsprechenden Maisstängel unter das Vorsatzgerät 1 zu transportieren, wo der Maisstängel einer nicht dargestellten Häckselvorrichtung zugeführt oder auf dem Feld abgelegt wird. In letzterem Fall kann unter dem Schrägförderer oder hinter dem Mähdrescher ein Mulchgerät angeordnet sein, das die Maisstängel und die Blattanteile der Maispflanze derart zerkleinert, dass diese nach dem anschließenden Bodenbearbeitungsvorgang im Boden verrotten können.

An die Pflückeinrichtung 8 schließt sich ein schneckenförmiger Querförderer 13 an, der gegenläufige Schneckengänge aufweist, von denen in der Figur nur ein rechtsgängiger Schneckengang 14 sichtbar ist, wobei diese links- oder rechtsgewundenen Schneckengänge bei Antrieb des Querförderers 13 die von den Pflückeinrichtungen 8 in den Einzugsbereich des Querförderers 13 transportierten Maiskolben in Richtung der Mitte des Vorsatzgerätes 1 zusammenziehen, wo diese über eine nicht dargestellte Eintrittsöffnung in den Schrägförderer des Mähdreschers gelangen.

Weitere Details der in den Figuren 1 dargestellten erfindungsgemäßen Einrichtung sind der nachfolgend erläuterten Figuren 2 zu entnehmen, in der, zumal es sich um die gleiche Ausführung der Erfindung handelt, gleiche Bezugszeichen verwendet werden. Die Figur 2 zeigt in einem schematisierten Schnitt die Anordnung der Einzugseinrichtung 3 in einem erfindungsgemäßen Vorsatzgerät 1. Dabei ist der Querförderer 13 in einer Schneidwerksmulde 15 angeordnet. Es ist erkennbar, dass die Pflückeinrichtung 8 mit ihrer vorderen und hinteren Pflückwalze 9 beziehungsweise 10 im Wesentlichen innerhalb einer Erstreckung des Querförderers 13 angeordnet ist. Dabei befinden sich oberhalb dieser Pflückwalzen 9 und 10 eine vordere Pflückplatte 16 sowie eine hintere Pflückplatte 17, wobei diese Pflückplatten 16 und 17 einen Pflückspalt 18, über den die Maisstängel zwischen den Pflückwalzen 9 und 10 eingezogen werden, begrenzen. Dabei werden der oder die Maiskolben über die entsprechenden Pflückplatten 16 und 17 von dem Maisstängel getrennt, während letzterer nach unten gezogen wird. Denkbar ist es aber auch, den Querförderer 13 gegenüber der hinteren Pflückwalze 10 in Richtung des Schrägförderers nach hinten versetzt anzuordnen, so dass diese außerhalb der Erstreckung des Querförderers 13 liegt.

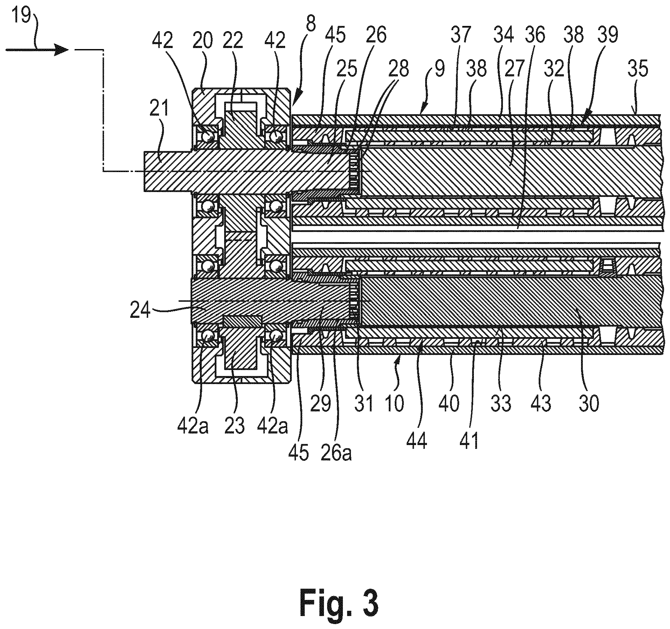

In der Figur 3 ist der Antrieb der beiden Pflückwalzen 9 und 10 im Längsschnitt dargestellt. Durch einen Pfeil 19 wird verdeutlicht, dass eine mittels Wälzlager 42 in einem Getriebegehäuse 20 gelagerte Eingangswelle 21 über ein Hauptantriebssystem des Mähdreschers angetrieben wird. Die Eingangswelle 21 nimmt ein Antriebsrad 22 auf, das mit einem Abtriebsrad 23 ein Räderpaar bildet. Dieses Abtriebsrad 23 ist dabei auf einem Wellenstummel 24 angeordnet, der über Wälzlager 42a ebenfalls im Getriebegehäuse 20 gelagert ist. Die Eingangswelle 21 weist einen im Durchmesser verjüngten Fortsatz 25 auf, der in eine Ausnehmung 26 einer die Pflückwalze 9 aufnehmenden Welle 27 ragt. Dabei wird zwischen der Eingangswelle 21 und der Welle 27 eine drehfeste Verbindung hergestellt, da sowohl der Fortsatz 25 als auch das Innere der Ausnehmung 26 mit einer Verzahnung 28 versehen sind. Gemäß einer alternativen Ausbildung können die Eingangswelle 21 und die die Pflückwalze 9 aufnehmende Welle 27 als eine gemeinsame Welle ausgeführt sein, welche mittels der Wälzlager 42 in dem Getriebegehäuse 20 fliegend gelagert wird.

In entsprechender Weise ist auch der in dem Abtriebsrad 22 angeordnete Wellenstummel 24 ausgebildet, denn dieser weist ebenfalls einen im Durchmesser reduzierten Fortsatz 29 auf, der in eine Ausnehmung 26a einer der Pflückwalze 10 zugeordneten Welle 30 angeordnet und über eine Verzahnung 31 mit dieser verbunden ist. Die Wellen 27 und 30 weisen jeweils Außenmantelflächen 32 und 33 auf. Außerdem besteht die Pflückwalze 9 aus einem hohlzylindrischen Walzenkörper 34, dessen Außenmantel 35 profiliert ist, also in Längsrichtung verlaufende Rippen 36 aufweist.

Zwischen einer Innenmantelfläche 37 des Walzenkörpers 34 und der Außenmantelfläche 32 der Welle 27 sind Kuppelelemente 38 einer ersten Überlastkupplung 39 angeordnet. Auch die zweite Pflückwalze 10 besteht aus einem hohlzylindrischen Walzenkörper 40, der außen profiliert ist. Eine Innenmantelfläche 41 dieses Walzenkörpers 40 bildet gemeinsam mit der Außenmantelfläche 33 der Welle 30 und mit Kuppelelementen 43 eine zweite dieser Pflückwalze 10 zugeordnete Überlastkupplung 44. Die Pflückwalzen 9 und 10 sind verkürzt dargestellt, so dass entsprechende Einzugsschnecken nicht sichtbar sind. Ferner sind die Walzenkörper 34 und 40 über Gleitlagerelemente 45 auf den Wellen 27 beziehungsweise 30 geführt.

Der Figur 3 ist zu entnehmen, dass den beiden Pflückwalzen 9 und 10 unmittelbar Überlastkupplungen 39 und 44 zugeordnet sind, welche in vorteilhafter Weise in die Pflückwalzen 9 und 10 integriert sind. In den Figuren 1 und 2 ist zwar eine konkrete Ausbildung einer Einzugseinrichtung 3 und eine Lage der Pflückwalzen 9 und 10 quer zur Ernterichtung dargestellt. Natürlich können die mit Überlastkupplungen 39 beziehungsweise 44 versehenen Pflückwalzen 9 und 10 auch in Längsrichtung, also in Ernterichtung des Mähdreschers angeordnet sein und mit jeder Art von Einzugseinrichtung kombiniert werden.

### Bezugszeichenliste

- 1: Vorsatzgerät
- 2: Pfeil für Fahrtrichtung
- 3: Einzugseinrichtung
- 4: Förderstern
- 4a: Förderstern
- 5: Förderstern
- 6: Führungskanal
- 7: Abdeckung
- 8: Pflückeinrichtung
- 9: Pflückwalze
- 10: Pflückwalze
- 11: Einzugsschnecke von 10
- 12: Einzugsschnecke von 9
- 13: Querförderer
- 14: Schneckengang
- 15: Schneidwerksmulde
- 16: vordere Pflückplatte
- 17: hintere Pflückplatte
- 18: Pflückspalt
- 19: Pfeil für Hauptantrieb
- 20: Getriebegehäuse
- 21: Eingangswelle
- 22: Antriebsrad
- 23: Abtriebsrad
- 24: Wellenstummel
- 25: Fortsatz von 21
- 26: Ausnehmung von 27
- 26a: Ausnehmung von 30
- 27: Welle
- 28: Verzahnung
- 29: Fortsatz
- 30: Welle
- 31: Verzahnung
- 32: Außenmantelfläche von 27
- 33: Außenmantelfläche von 30
- 34: Walzenkörper von 9
- 35: Außenmantel
- 36: Rippen der Profilierung
- 37: Innenmantelfläche von 34
- 38: Kuppelelemente
- 39: Überlastkupplung
- 40: Walzenkörper von 10
- 41: Innenmantelfläche von 40
- 42: Wälzlager
- 42a: Wälzlager
- 43: Kuppelelemente
- 44: Überlastkupplung
- 45: Gleitlagerelemente

## Patentansprüche

1. Vorsatzgerät (1) zum Ernten von Mais für eine selbstfahrende Erntemaschine wobei das Vorsatzgerät eine Pflückeinrichtung (8) zum Trennen der Maiskolben von den übrigen Bestandteilen der Maispflanze aufweist, die gegenläufig rotierende Pflückwalzen (9 und 10) aufweist, wobei innerhalb eines Antriebsstrangs der Pflückeinrichtung (8) eine Überlastkupplung angeordnet ist, **dadurch gekennzeichnet, dass** jeder Pflückwalze (9 und 10) unmittelbar eine Überlastkupplung (39, 44) zugeordnet ist.

2. Vorsatzgerät (1) nach Patentanspruch 1, **dadurch gekennzeichnet, dass** die Überlastkupplung (39, 44) innerhalb einer die jeweilige Pflückwalze (9, 10) aufnehmenden Welle (27, 30) angeordnet ist.

3. Vorsatzgerät (1) nach Patentanspruch 1, **dadurch gekennzeichnet, dass** die Überlastkupplung (39, 44) innerhalb der axialen Erstreckung der Pflückwalze (9, 10) angeordnet ist.

4. Vorsatzgerät (1) nach Patentanspruch 3, **dadurch gekennzeichnet, dass** die Pflückwalze (9, 10) einen hohlzylindrischen Walzenkörper (34, 40) aufweist, wobei die Überlastkupplung (39, 44) durch an einer Innenmantelfläche (37, 41) des Walzenkörpers (34, 40) ausgebildeten ersten Kuppelflächen, durch an einer Außenmantelfläche (32, 33) einer Welle 27, 30), die konzentrisch durch den Walzenkörper (34, 40) verläuft, ausgebildeten zweiten Kuppelflächen sowie durch zwischen den Innenmantelflächen (37, 41) und den Außenmantelflächen (32, 33) angeordneten Kuppelelementen (38, 43) gebildet wird.

5. Vorsatzgerät (1) nach Patentanspruch 4, **dadurch gekennzeichnet, dass** die Innenmantelfläche (37, 41) reibschlüssig gegenüber der Außenmantelfläche (32, 33) geführt ist.

6. Vorsatzgerät (1) nach Patentanspruch 4, **dadurch gekennzeichnet, dass** die Innenmantelfläche (37, 41) und/oder die Außenmantelfläche (32, 33) gemeinsam mit den Kuppelelementen (38, 43) ein kraft- beziehungsweise formschlüssig wirkendes Kuppelsystem bilden.

7. Vorsatzgerät (1) nach Patentanspruch 6, **dadurch gekennzeichnet, dass** an der Innenmantelfläche (37, 41) und/oder der Außenmantelfläche (32, 33) Rastnuten ausgebildet sind, in die als Sperrkörper ausgebildete Kuppelelemente (38, 43) eingreifen.

## Claims

1. Front attachment (1) for harvesting maize for a self-propelled harvester, wherein the front attachment has a picking device (8), for separating the maize cobs from the other parts of the maize plant, which has picking rollers (9 and 10) rotating in opposite directions, wherein an overload clutch is arranged within a drive train of the picking device (8), **characterized in that** an overload clutch (39, 44) is directly allocated to each picking roller (9 and 10).

2. Front attachment (1) according to claim 1, **characterized in that** the overload clutch (39, 44) is arranged within a shaft (27, 30) accommodating the respective picking roller (9, 10).

3. Front attachment (1) according to claim 1, **characterized in that** the overload clutch (39, 44) is arranged within the axial extent of the picking roller (9, 10).

4. Front attachment (1) according to claim 3, **characterized in that** the picking roller (9, 10) has a hollow cylindrical roller body (34, 40), wherein the overload clutch (39, 44) is formed by first coupling surfaces formed on an inner shell surface (37, 41) of the roller body (34, 40), by second coupling surfaces formed on an outer shell surface (32, 33) of a shaft (27, 30) which runs concentrically through the roller body (34, 40), as well as by coupling elements (38, 43) arranged between the inner shell surfaces (37, 41) and the outer shell surfaces (32, 33).

5. Front attachment (1) according to claim 4, **characterized in that** the inner shell surface (37, 41) is guided with frictional engagement relative to the outer shell surface (32, 33).

6. Front attachment (1) according to claim 4, **characterized in that** the inner shell surface (37, 41) and/or the outer shell surface (32, 33), together with the coupling elements (38, 43), form a coupling system acting in force-locking or positive-locking manner.

7. Front attachment (1) according to claim 6, **characterized in that**, on the inner shell surface (37, 41) and/or the outer shell surface (32, 33), locking grooves are formed into which engage coupling elements (38, 43) formed as locking bodies.

## Revendications

1. Outil frontal (1) pour récolter du maïs pour une machine de récolte automotrice, l'outil frontal comprenant, pour séparer les épis de maïs des autres éléments constitutifs du pied de maïs, un équipement de cueillage (8) qui comporte des rouleaux cueilleurs à rotation contraire (9 et 10), à l'intérieur de la chaîne de transmission de l'équipement de cueillage (8) étant disposé un accouplement de surcharge, **caractérisé en ce qu'**à chaque rouleau cueilleur (9 et 10) est associé directement un accouplement de surcharge (39, 44).

2. Outil frontal (1) selon la revendication 1, **caractérisé en ce que** l'accouplement de surcharge (39, 44) est disposé à l'intérieur d'un arbre (27, 30) recevant le rouleau cueilleur correspondant (9, 10).

3. Outil frontal (1) selon la revendication 1, **caractérisé en ce que** l'accouplement de surcharge (39, 44) est disposé à l'intérieur de l'extension axiale du rouleau cueilleur (9, 10).

4. Outil frontal (1) selon la revendication 3, **caractérisé en ce que** le rouleau cueilleur (9, 10) comporte un corps de rouleau cylindrique creux (34, 40), l'accouplement de surcharge (39, 44) étant formé par des premières surfaces d'accouplement ménagées sur une surface d'enveloppe intérieure (37, 41) du corps de rouleau (34, 40), par des secondes surfaces d'accouplement ménagées sur une surface d'enveloppe extérieure (32, 33) d'un arbre (27, 30) qui s'étend concentriquement à travers le corps de rouleau (34, 40) ainsi que par des éléments d'accouplement (38, 43) disposés entre les surfaces d'enveloppe intérieure (37, 41) et les surfaces d'enveloppe extérieure (32, 33).

5. Outil frontal (1) selon la revendication 4, **caractérisé en ce que** la surface d'enveloppe intérieure (37, 41) est guidée par liaison par friction par rapport à la surface d'enveloppe extérieure (32, 33).

6. Outil frontal (1) selon la revendication 4, **caractérisé en ce que** la surface d'enveloppe intérieure (37, 41) et/ou la surface d'enveloppe extérieure (32, 33) forment, conjointement avec les éléments d'accouplement (38, 43), un système d'accouplement agissant par conjugaison de forces, respectivement de formes.

7. Outil frontal (1) selon la revendication 6, **caractérisé en ce que** sur la surface d'enveloppe intérieure (37, 41) et/ou la surface d'enveloppe extérieure (32, 33) sont ménagées des gorges de crantage dans lesquelles pénètrent les éléments d'accouplement (38, 43) conformés en corps de blocage.
